# EUROPÄISCHE PATENTANMELDUNG

(11) **EP 3 444 068 A2**
(43) Veröffentlichungstag der Anmeldung: **20.02.2019**
(21) Anmeldenummer: 18185195.7
(22) Anmeldetag: 24.07.2018
(51) Int. Cl.: B23Q 11/00, B23Q 5/36

(54) **IMPULSENTKOPPLUNG AN EINER FÜHRUNGSEINRICHTUNG EINER HOLZBEARBEITUNGSVORRICHTUNG**

(30) Priorität: 25.07.2017 DE 102017116775
(71) Anmelder: HOMAG GmbH, 72296 Schopfloch (DE)
(72) Erfinder: Morlock, Markus, 72250 Freudenstadt (DE)
(74) Vertreter: Hoffmann Eitle

(57) **Zusammenfassung**

Mit der vorliegenden Erfindung wird eine Impulsentkopplungsvorrichtung (1) für eine Führungseinrichtung einer Holzbearbeitungsvorrichtung bereitgestellt, aufweisend: eine Antriebsvorrichtung (20) mit einem Primärteil (21) und einem Sekundärteil (22), eine Führungseinrichtung (10), insbesondere eine translatorische oder rotatorische Führungseinrichtung (10), wobei die Führungseinrichtung (10) das Primärteil (21) beweglich lagert, eine Befestigungseinrichtung (30), die dazu eingerichtet ist, ein Bearbeitungsaggregat (40) aufzunehmen und an das Primärteil (21) anzubinden, und eine Reaktionsmasse (50), die mit dem Sekundärteil (22) verbunden ist und dazu eingerichtet ist, bei einer Bewegung des Primärteils (21) gemeinsam mit dem Sekundärteil (22) eine Gegenbewegung ausführen zu können.

## Beschreibung

### Technisches Gebiet

Die vorliegende Erfindung betrifft eine Impulsentkopplungsvorrichtung für eine Führungseinrichtung einer Holzbearbeitungsvorrichtung, insbesondere für die Bearbeitung von bevorzugte plattenförmigen Werkstücken (W), die bevorzugt zumindest abschnittsweise aus Holz, Holzwerkstoff, Holzersatzwerkstoff, Kunststoff und/oder Glas bestehen sowie eine die erfindungsgemäße Impulsentkopplungsvorrichtung aufweisende Holzbearbeitungsvorrichtung. Ferner betrifft die vorliegende Erfindung ein Verfahren zur Impulsentkopplung an einer Führungseinrichtung einer Holzbearbeitungsvorrichtung.

Die Vorrichtungen sowie das Verfahren der vorliegenden Erfindung kommen insbesondere im Bereich der Möbel- und Bauelementeindustrie zum Einsatz. Bei den genannten Werkstücken handelt es sich bevorzugt um Küchenplatten, Einlegebretter, Möbelfronten, Fußbodenpaneele, Fenster- oder Türrahmen oder ähnliches.

### Stand der Technik

Aufgrund des hohen Kosten- und Zeitdrucks in der modernen Fertigung sowie der Fortentwicklung neuer Materialbearbeitungs-, Beschichtungs- oder Aufbaufahren wie Hochgeschwindigkeitsfräsen, Hochgeschwindigkeitsbohren, Ultraschallschneiden, Laserschneiden und dergleichen sind die Anforderung an geringe Taktzeiten in jüngster Zeit stark angestiegen.

Bei vielen Bearbeitungsvorrichtungen in industriellen Produktionsprozessen werden Werkstücke oder Werkzeuge bewegt, wobei die Bewegung entlang fest vorgegebener Achsbahnen erfolgt. Die Arbeitsgeschwindigkeit (Taktzeit) der jeweiligen Bearbeitungsvorrichtung hängt wesentlich von der Geschwindigkeit der Zustell- und Transportbewegungen ab, weshalb mit dem Streben nach kurzen Taktzeiten im Umkehrschluss hohe Achsgeschwindigkeiten und hohe Beschleunigungsraten verbunden sind.

In modernen Bearbeitungsvorrichtungen werden oftmals die Zustellbewegungen, die eine gewisse Präzision erfüllen müssen, von geregelten elektrischen Servoantrieben oder Linearantrieben ausgeführt. Die mit den schnellen Achsbewegungen einhergehenden hohen Beschleunigungen und Rucke (Änderung der Beschleunigung je Zeiteinheit und gegebenenfalls Änderung der Beschleunigungsrichtung) führen zu Erschütterungen in den Vorrichtungsstrukturen und damit zu negativen Einflüssen auf die Bearbeitungsergebnisse sowie die Haltbarkeit der Bearbeitungsvorrichtung, insbesondere von Führungseinrichtungen.

Im Stand der Technik sind bereits Bearbeitungsvorrichtungen und Verfahren bekannt, die versuchen die obig genannten Probleme zu lösen. So beschreibt beispielsweise die DE 10 2004 057 062 A1 eine Lineardirektantriebsanordung mit einem geregelten Nutzantrieb, aufweisend einen von einer Wicklung gebildeten Primärteil, einen Sekundärteil sowie eine Führung für einen mit dem Primärteil verbundenen Schlitten, dem ein etwa gleichartig aufgebauter, geregelter, gegensinnig bewegter Kompensationsantrieb zur Vermeidung von Gestellschwingungen von Werkzeugmaschinen, zugeordnet ist, wobei der Schlitten mit dem Primärteil des Kompensationsantriebsgleichfalls auf dem Sekundärteil und in der Führung des Nutzantriebs läuft, und wobei der Nutzantrieb und der Kompensationsantrieb jeweils eine eigene Regelschaltung aufweisen.

Derartige Lineardirektantriebsanordungen mit Primärantrieb und Kompensationsantrieb sind äußerst aufwendig und kostenintensiv, insbesondere die synchrone Regelung der beiden Antriebe ist aufwendig. Ferner, da in der Regel eine zur Verfügung stehende Kompensationsmasse geringer ist als eine Nutzmasse (z.B. Gewicht eines Bearbeitungsaggregates samt Werkzeug), ist es notwendig diesen Unterschied mittels einer höheren Beschleunigung des Kompensationsantriebs zu kompensieren, wodurch der Beschleunigung des Primärantriebs unerwünschte Grenzen gesetzt sind. Ferner sind derartige System nur schwer im Falle von rotatorischen Führungseinrichtungen realisierbar.

Andererseits ist es bei aus dem Stand der Technik bekannten Achskonfigurationen zur hochdynamischen Bewegung von Bearbeitungsaggregaten zur Impulsentkopplung notwendig, parallel zur Nutzlast entsprechend große Ausgleichsmassen zu bewegen, was zu aufwendigen, massiven und vergleichsweise instabilen Strukturen führt.

### Gegenstand der Erfindung

Ziel der vorliegenden Erfindung ist es, eine Impulsentkopplungsvorrichtung für eine Führungseinrichtung einer Holzbearbeitungsvorrichtung, eine Holzbearbeitungsvorrichtung sowie ein Verfahren zur Impulsentkopplung an einer Führungseinrichtung einer Holzbearbeitungsvorrichtung bereitzustellen, die es ermöglichen, mit geringem Energie-, Steuerungs- und Konstruktionsaufwand eine effektive und verbesserte Impulsentkopplung zwischen einem Bearbeitungsaggregat einer Holzbearbeitungsvorrichtung und beispielsweise einem Maschinengestell zu realisieren, um eine unerwünschte Übertragung von Schwingungen oder Stößen (Kraftstößen), die durch ein abruptes Beschleunigen und Verzögern einer Achsbewegung eines Bearbeitungsaggregats verursacht werden, auf das Maschinengestell und damit auf andere Führungseinrichtungen und/oder Bearbeitungsaggregate zu vermeiden. Ferner kann mittels der vorgeschlagenen Impulsentkopplung eine Impulsübertragung von einem Bearbeitungsaggregat zu einem Maschinenbett und eine Impulsübertragung von dem Maschinenbett zu dem Bearbeitungsaggregat unterbunden werden.

Die Aufgabe wird gelöst durch eine Impulsentkopplungsvorrichtung nach Anspruch 1, eine Holzbearbeitungsvorrichtung nach Anspruch 10 sowie ein Verfahren nach Anspruch 13. Bevorzugte Weiterbildungen der Erfindung sind in den abhängigen Ansprüchen gegeben, wobei der Gegenstand der die Vorrichtung(en) betreffenden abhängigen Ansprüche im Rahmen des Verfahrens sowie der Bearbeitungsvorrichtung zum Einsatz kommen kann, und umgekehrt.

Einer der Gedanken der vorliegenden Erfindung ist es, eine Impulsentkopplungsvorrichtung zu schaffen, die eine Reaktionsmasse bereitstellt, mittels der Schwingungen oder Stöße (Kraftstöße) eines Primärteils, die durch eine Beschleunigung oder Verzögerung des Primärteils entstehen, gedämpft werden können. Hierzu ist die Reaktionsmasse dazu eingerichtet, bei einer Bewegung des Primärteils eine Gegenbewegung in Reaktion auf die Bewegung des Primärteils ausführen zu können.

Mittels der vorgeschlagenen Impulsentkopplungsvorrichtung ist es auf einfache Weise möglich, Schwingungen oder Stöße, die während einer Bewegung eines Bearbeitungsaggregates, insbesondere während einer Beschleunigungs- bzw. Verzögerungsbewegung des Bearbeitungsaggregates, entstehen, zu dämpfen und somit zu verhindern, dass sich Schwingungen oder Stöße auf ein Maschinengestell einer Holzbearbeitungsvorrichtung ausbreiten. Anhand der vorgeschlagenen Impulsentkopplungsvorrichtung ist es gegenüber bekannten Vorrichtungen möglich, anhand eines einfachen Vorrichtungsaufbaus sowie ohne komplizierte Steuerung Schwingungen oder Stöße eines dynamischen Elements einer Bearbeitungsvorrichtung zu dämpfen bzw. vollständig zu beseitigen, was die Herstellungskosten der vorgeschlagenen Impulsentkopplungsvorrichtung im Vergleich zu bekannten Systemen drastisch reduziert. Ferner ist es anhand der vorgeschlagenen Impulsentkopplungsvorrichtung aufgrund der Dämpfung oder vollständigen Beseitigung auftretender Schwingungen oder Stöße möglich, eine Beeinflussung parallel arbeitender Bearbeitungsaggregate durch die Schwingungen oder Stöße zu verhindern sowie negative Auswirkungen auf die Holzbearbeitungs-vorrichtung zu vermeiden. So kann z.B. der Verschleiß einer Führungseinrichtung, welche die Bewegung des Bearbeitungsaggregates ermöglicht, reduziert werden sowie die Masse des Maschinengestells reduziert werden. Ferner ist es mittels der vorgeschlagenen Impulsentkopplungsvorrichtung möglich, innerhalb eines Bearbeitungsaggregates vorgesehene Führungseinrichtungen, die beispielsweise für die Realisierung von Zustellbewegungen einzelner Werkzeuge notwendig sind, schwingungstechnisch voneinander zu entkoppeln. D.h., die Übertragung von Schwingungen oder Stößen (Kraftstößen), die beispielsweise durch Verfahrbewegungen einzelner Werkzeuge entstehen, auf benachbarte Führungen anderer Werkzeuge zu unterdrücken. Des Weiteren ist es anhand der vorgeschlagenen Impulsentkopplungsvorrichtung möglich, eine Übertragung von Schwingungen oder Stößen (Impulse) von einzelnen Bearbeitungsaggregaten bzw. Bearbeitungsschnittstellen zu einem Maschinenbett zu reduzieren bzw. zu unterbinden. Anderseits ist es auch möglich, eine Übertragung von Schwingungen oder Stößen von dem Maschinenbett zu den einzelnen Bearbeitungsaggregaten bzw. Bearbeitungsschnittstellen zu reduzieren bzw. zu unterbinden.

Gemäß einer Ausführungsform der vorliegenden Erfindung weist eine Impulsentkopplungsvorrichtung für eine Führungseinrichtung einer Holzbearbeitungsvorrichtung, insbesondere einer Horizontal- oder Vertikalachse einer Holzbearbeitungsvorrichtung, insbesondere für die Bearbeitung von bevorzugt plattenförmigen Werkstücken, die bevorzugt zumindest abschnittsweise aus Holz, Holzwerkstoff, Holzersatzwerkstoff, Kunststoff und/oder Glas bestehen, auf: eine Antriebsvorrichtung mit einem Primärteil und einem Sekundärteil, eine erste Führungseinrichtung, insbesondere eine translatorische oder rotatorische erste Führungseinrichtung, wobei die erste Führungseinrichtung das Primärteil beweglich lagert, eine Befestigungseinrichtung, die dazu eingerichtet ist, ein Bearbeitungsaggregat aufzunehmen und an das Primärteil anzubinden, und eine Reaktionsmasse, die mit dem Sekundärteil verbunden ist und dazu eingerichtet ist, bei einer Bewegung des Primärteils gemeinsam mit dem Sekundärteil eine Gegenbewegung in Reaktion auf die Bewegung des Primärteils ausführen zu können. Hierbei besteht auch die Möglichkeit, dass es sich nicht um eine horizontal oder vertikal verlaufende Achse handelt, sondern um eine Achse, die in einem beliebigen Winkel zur Horizontalen verläuft.

Im Sinne der vorliegenden Erfindung bezieht sich ein "Primärteil" auf einen Teil einer Antriebsvorrichtung, mittels dessen eine Nutzlast, beispielsweise ein Bearbeitungsaggregat, bewegt wird, d.h., welcher an der Abtriebsseite der Antriebsvorrichtung liegt. Die der Nutzlast abgewandte Seite der Antriebsvorrichtung wird im Folgenden als Reaktionsseite bzw. als "Sekundärteil" der Antriebsvorrichtung bezeichnet. Es besteht jedoch auch die Möglichkeit, dass das "Sekundärteil" die Nutzlast antreibt. D.h., die Abtriebsseite der Antriebsvorrichtung auf der dem Maschinengestell zugewandten Seite der Antriebsvorrichtung vorgesehen ist.

Eine Gegenbewegung im Sinne der vorliegenden Erfindung bezieht sich auf eine Bewegung, die in Reaktion auf eine Bewegung des Primärteils, insbesondere in Bewegung des Bearbeitungsaggregates entlang der Führungseinrichtung, entsteht. Gemäß dem dritten newtonschen Gesetz: Kraft gleich Gegenkraft, geht eine Kraft von einem Körper A auf einen Körper B immer mit einer gleich großen, aber entgegen gerichteten Kraft von Körper B auf Körper A einher. Im vorliegenden Fall bedeutet dies, dass durch eine Beschleunigung oder Verzögerung einer Nutzlast (Primärteil) durch die Antriebsvorrichtung eine entsprechend große, jedoch entgegen gerichtete Gegenkraft (Reaktionskraft) auf das Sekundärteil der Antriebsvorrichtung ausgeübt wird, welche bei bekannten Systemen in das Maschinengestell eingeleitet wird und von diesem aufgenommen bzw. gedämpft wird. Aus diesem Grund ist es bei bekannten Systemen notwendig, entsprechend den zu bewegenden Massen und den vorliegenden Beschleunigungs- bzw. Verzögerungsraten das Maschinengestell ausreichend schwer auszulegen.

Gemäß der vorliegenden Erfindung ist eine Reaktionsmasse vorgesehen, welche die Gegenkraft des Primärteils, die auf das Sekundärteil ausgeübt wird, aufnimmt, und dadurch eine Gegenbewegung ausführt, die in ihrem Impuls dem Impuls der Bewegung des Primärteils gleich ist, lediglich in entgegengesetzter Richtung.

Ferner ist es bevorzugt, dass die Impulsentkopplungsvorrichtung eine Dämpfungseinrichtung aufweist, die bevorzugt zwischen einem Maschinengestell und dem Sekundärteil und/oder der Reaktionsmasse angeordnet ist, wobei die Dämpfungseinrichtung dazu eingerichtet ist, Schwingungen oder Stöße des Sekundärteils und der Reaktionsmasse, die aufgrund der Gegenbewegung erzeugt werden, zu dämpfen und/oder zu eliminieren.

Auf diese Weise ist es möglich, eine Amplitude der Gegenbewegung der Gegenmasse zu verringern und somit die Trägheit der Impulsentkopplungsvorrichtung zu reduzieren. Auf diese Weise kann vermieden werden, dass die Impulsentkopplungsvorrichtung der Bewegung des Primärteils übermäßig nachschwingt (nacheilt).

Des Weiteren ist es vorteilhaft, eine zweite Führungseinrichtung vorzusehen, die an dem Maschinengestell der Holzbearbeitungsvorrichtung befestigt ist und das Sekundärteil und die Reaktionsmasse beweglich lagert, wobei insbesondere eine Bewegungsrichtung der ersten Führungseinrichtung parallel zu einer Bewegungsrichtung der zweiten Führungseinrichtung ist.

Die dadurch bereitgestellte Impulsentkopplungsvorrichtung ist insbesondere in der Lage, es dem Sekundärteil zu ermöglichen, in Reaktion auf die eingeleitete Gegenkraft eine Gegenbewegung zur Kompensation der Gegenkraft auszuführen. Auf diese Weise wird wie oben bereits ausgeführt keine Reaktionskraft in das Maschinengestell eingeleitet, sondern stattdessen die Reaktionskraft durch die Reaktionsmasse aufgenommen und durch die Gegenbewegung der Reaktionsmasse gedämpft bzw. vollständig beseitigt.

Gemäß einer weiteren Ausführungsform der vorliegenden Erfindung ist die erste Führungseinrichtung an dem Maschinengestell oder an dem Sekundärteil oder an der Reaktionsmasse befestigt.

Ferner ist es bevorzugt, dass die Dämpfungseinrichtung zumindest ein passives und/oder aktives Dämpfungselement aufweist, wobei das zumindest eine Dämpfungselement ausgewählt ist aus der Gruppe: eine Feder, ein pneumatischer oder hydraulischer Stoßdämpfer, ein elektromagnetischer Dämpfer, ein Wirbelstromelement oder ein elektromechanischer Wandlerwerkstoff.

Im Falle des Vorsehens von aktiven Dämpfungselementen ist es möglich, die Dämpfungscharakteristik (Dämpfungskonstante) der Dämpfungseinrichtung zu verändern, insbesondere an die Bewegung des Primärteils anzupassen.

Des Weiteren ist es vorteilhaft, ein erstes Wegmesssystem vorzusehen, das zur Erfassung einer Position des Primärteils in Bezug auf das Maschinengestell der Holzbearbeitungsvorrichtung eingerichtet ist.

Das Vorsehen eines ersten Wegsystems bietet den Vorteil, dass mittels des Wegmesssystems stetig eine Bestimmung der Position des Primärteils in Bezug auf das Maschinengestell ermöglicht wird, und somit die Position eines Werkzeugs eines Bearbeitungsaggregates bestimmt und somit die Position des Werkzeugs im Raum gesteuert werden kann. Auf diese Weise ist es möglich, das Werkzeug einer Werkstückkontur entlang zu führen.

Ebenso ist es vorteilhaft, dass die Impulsentkopplungsvorrichtung ein zweites Wegmesssystem aufweist, das zur Erfassung einer Relativbewegung zwischen Primärteil und Sekundärteil eingerichtet ist, zur Kommutierung der Antriebsvorrichtung.

Indem ein zweites Wegmesssystem vorgesehen ist, kann die relative Position zwischen Primärteil und Sekundärteil erfasst werden. Dies ist insbesondere vorteilhaft, da aufgrund der beweglichen Lagerung des Sekundärteils eine relative Bewegung zwischen Primärteil und Sekundärteil aufgrund der Reaktionsbewegung stattfindet, welche sich mit der eigentlichen Antriebsbewegung der Antriebsvorrichtung überlagert.

Ferner kann/können die erste Führungseinrichtung und/oder die zweite Führungseinrichtung ausgewählt sein aus der Gruppe: eine Linearführung, insbesondere Gleitführung oder Wälzführung, eine Profilschienenführung oder ein Drehlager, insbesondere einen Drehkranz.

Des Weiteren ist es bevorzugt, dass die Antriebsvorrichtung ausgewählt ist aus der Gruppe: ein elektrischer Linearmotor, ein Fluidmotor, ein Servoantrieb oder ein Schrittmotor.

Ferner betrifft die vorliegende Erfindung eine Holzbearbeitungsvorrichtung, die insbesondere für die Bearbeitung von bevorzugt plattenförmigen Werkstücken (W) verwendet wird, die bevorzugt zumindest abschnittsweise aus Holz, Holzwerkstoff, Holzersatzwerkstoff, Kunststoff und/oder Glas bestehen, aufweisend: zumindest ein Bearbeitungsaggregat zum Bearbeiten des Werkstücks und die oben beschriebene Impulsentkopplungsvorrichtung.

Anhand der vorgeschlagenen Holzbearbeitungsvorrichtung ist es möglich, wie oben bereits in Bezug auf die Impulsentkopplungsvorrichtung im Detail ausgeführt, eine Entkopplung zwischen einer Bewegung eines Bearbeitungsaggregates und einem Maschinengestell der Holzbearbeitungsvorrichtung zu schaffen, wodurch negative Einflüsse aufgrund von Schwingungen oder Stößen, die durch die Bewegung des Bearbeitungsaggregates entstehen, auf andere Bearbeitungsaggregate der Holzbearbeitungsvorrichtung oder auf das Maschinengestell der Holzbearbeitungsvorrichtung reduziert oder vorteilhafterweise vollständig beseitigt werden können.

Gemäß einer Ausführungsform der vorliegenden Erfindung handelt es sich bei der Holzbearbeitungsvorrichtung um eine Durchlaufmaschine, ein CNC-Bearbeitungszentrum, eine Bohrmaschine, insbesondere eine Durchlauf-Bohrmaschine, eine Beschichtungsvorrichtung oder eine Fräsvorrichtung.

Bei CNC-Bearbeitungszentren ist die Integrierung der erfindungsgemäßen Impulsentkopplungsvorrichtung insbesondere vorteilhaft, da CNC-Bearbeitungszentren für gewöhnlich mehrere Achssysteme aufweisen, in modernen CNC-Bearbeitungszentren bis zu sieben unabhängige Bewegungsachsen, die sich bei herkömmlichen Zentren aufgrund der durch die Bewegung der Achsen entstehenden Schwingungen oder Stößen gegenseitig, negativ beeinflussen. Diese gegenseitige, negative Beeinflussung kann bei Integrierung der erfindungsgemäßen Impulsentkopplungsvorrichtung verhindert werden. Ferner weisen CNC-Bearbeitungszentren oftmals mehrere Bearbeitungsaggregate auf, welche wiederum mehrere Achssysteme aufweisen können, womit bei Verwendung der erfindungsgemäßen Impulsentkopplungseinrichtung vielmals die gegenseitige, negative Beeinflussung vermieden werden kann.

Ferner ist es bevorzugt, dass die Impulsentkopplungsvorrichtung eine Steuerungseinrichtung aufweist, die dazu eingerichtet ist, basierend auf Steuerungsparametern, insbesondere Beschleunigungs-, Verzögerungs-, Gewichts-, und Verfahrparametern, eine Dämpfungseinrichtung der Impulsentkopplungseinrichtung, insbesondere aktive Dämpfungselemente der Dämpfungseinrichtung, zu steuern, insbesondere eine Dämpfungscharakteristik der aktiven Dämpfungselemente entsprechend anzupassen.

Auf diese Weise wird es ermöglicht, gezielt die Dämpfungscharakteristik (Dämpfungskonstante) der Dämpfungseinrichtung zu verändern, insbesondere an die Bewegung des Primärteils anzupassen.

Des Weiteren betrifft die vorliegende Erfindung ein Verfahren zur Impulsentkopplung an einer Führungseinrichtung einer Holzbearbeitungsvorrichtung, insbesondere einer Holzbearbeitungsvorrichtung für die Bearbeitung von bevorzugt plattenförmigen Werkstücken, die bevorzugt zumindest abschnittsweise aus Holz, Holzwerkstoff, Holzersatzwerkstoff, Kunststoff und/oder Glas bestehen, mit den Schritten:
- Beschleunigen (Antreiben) oder Verzögern eines Primärteils einer Antriebsvorrichtung, insbesondere entlang einer ersten Führungseinrichtung,
- Aufnehmen einer Gegenbewegung eines Sekundärteils zu der Beschleunigungs- oder Verzögerungsbewegung des Primärteils durch eine Reaktionsmasse, wobei die Gegenbewegung durch eine zweite Führungseinrichtung ermöglicht ist,
- passives und/oder aktives Dämpfen der Gegenbewegung des Sekundärteils.

Im Zusammenhang mit dem erfindungsgemäßen Verfahren zur Impulsentkopplung an einer Führungseinrichtung einer Holzbearbeitungsvorrichtung können die gleichen Effekte und Vorteile wie bereits in Bezug auf die Impulsentkopplungsvorrichtung und die Holzbearbeitungsvorrichtung erzielt werden, weshalb von einer erneuten Ausführung dieser abgesehen wird.

Darüber hinaus ist es bevorzugt, dass die Gegenbewegung des Sekundärteils eine passive, aus der Antriebsbewegung des Primärteils resultierende Bewegung ist und eine Dämpfung der Gegenbewegung mittels einer Steuerungseinrichtung gesteuert wird, die basierend auf Steuerungsparametern, insbesondere Beschleunigungs-, Abbrems-, Gewichts-, und Verfahrparametern, eine Dämpfungseinrichtung der Impulsentkopplungseinrichtung, insbesondere aktive Dämpfungselemente der Dämpfungseinrichtung, steuert, wobei bevorzugt eine Dämpfungscharakteristik der aktiven Dämpfungselemente entsprechend den Steuerungsparametern angepasst wird.

Auf diese Weise wird es ermöglicht, gezielt die Dämpfungscharakteristik (Dämpfungskonstante) der Dämpfungseinrichtung zu verändern, insbesondere an die Bewegung des Primärteils, wie zum Beispiel Beschleunigungs-, Abbrems-, Gewichts-, und Verfahrparametern, anzupassen.

Gemäß einer weiteren Ausführungsform der vorliegenden Erfindung erhöht die Steuerungseinrichtung eine Dämpfungskonstante mindestens eines aktiven Dämpfungselements, wenn eine hohe Beschleunigung oder Verzögerung des Primärteils erfolgen soll und die Steuerungseinrichtung reduziert die Dämpfungskonstante des mindesten einen aktiven Dämpfungselements, wenn eine geringe Beschleunigung oder Abbremsung des Primärteils erfolgen soll.

### Kurze Beschreibung der Zeichnungen

Fig. 1 zeigt schematisch eine Führungseinrichtung einer Holzbearbeitungsvorrichtung gemäß dem Stand der Technik, und
Fig. 2 zeigt schematisch eine Ausführungsform einer Impulsentkopplungsvorrichtung für eine Führungseinrichtung einer Holzbearbeitungsvorrichtung gemäß der vorliegenden Erfindung.

### Detaillierte Beschreibung der bevorzugten Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um neue Ausführungsformen auszubilden.

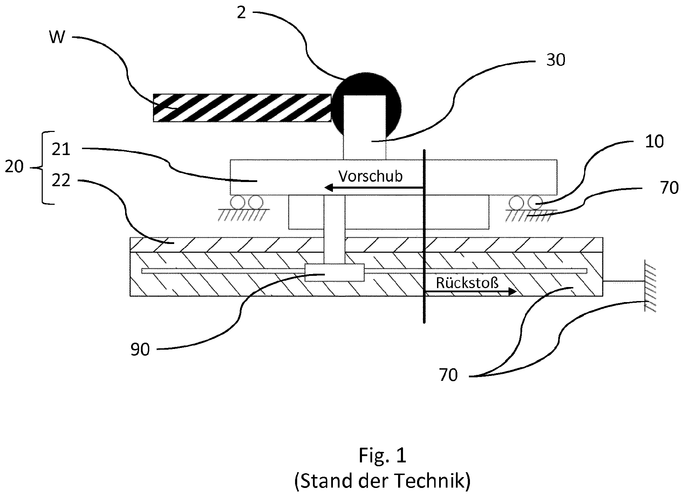

Fig. 1 zeigt schematisch ein Achssystem einer Holzbearbeitungsvorrichtung gemäß dem Stand der Technik. Wie der Fig. 1 entnommen werden kann, weist die Holzbearbeitungsvorrichtung eine Führungseinrichtung 10 auf, mittels der ein Primärteil 21 einer Antriebseinheit 20 beweglich gelagert ist. Bei der Führungseinrichtung 10 handelt es sich beispielhaft um eine Linearführung. Ferner weist die Antriebsvorrichtung 20 ein Sekundärteil auf, das starr an einem Maschinengestell 70 der Holzbearbeitungsvorrichtung befestigt ist. Die Führungseinrichtung 10 ist ebenfalls an dem Maschinengestell 70 befestigt und ermöglicht eine Relativbewegung zwischen Primärteil 21 und Maschinengestell 70. Des Weiteren ist an dem beweglich gelagerten Primärteil 21 eine Befestigungseinrichtung 30 vorgesehen, die dazu dient, Bearbeitungsaggregate an dem Primärteil 21 anzubinden und somit die Bearbeitungsaggregate in einer Bewegungsrichtung der Führungseinrichtung 10 beweglich aufzunehmen. Es sind auch Bearbeitungsaggregate bekannt, welche intern derartige Führungseinrichtungen 10 aufweisen, um beispielsweise innerhalb des Bearbeitungsaggregates ein Werkzeug 2 zu verfahren und/oder eine Zustellbewegung des Werkzeugs zu realisieren.

In Fig. 1 ist des Weiteren als ein mögliches Werkzeug 2 ein Fräser angedeutet, welcher mit einem Werkstück W in Eingriff steht. Ferner ist in Fig. 1 veranschaulicht, dass für den Fall, dass der Primärteil 21 samt Bearbeitungsaggregat in Fig. 1 nach links beschleunigt wird (Vorschub), eine entsprechend große Reaktionskraft (Gegenkraft) auf das Sekundärteil 22 wirkt, die über das Sekundärteil 22 auf das Maschinengestell 70 übertragen wird. In Fig. 1 wirkt die Reaktionskraft nach rechts. Aufgrund der Reaktionskraft (Rückstoß) werden Schwingungen oder Stöße in das Maschinengestell eingeleitet, welche wie oben bereits ausgeführt negative Folgen haben können.

Ebenfalls ist in Fig. 1 ein Wegmesssystem 90 dargestellt, welches zur Bestimmung der Position des Primärteils 21, insbesondere des Bearbeitungsaggregates in Bezug auf das Maschinengestell 70 verwendet wird. Hierzu weist das Wegmesssystem 90 einen Messkopf, der starr mit dem Primärteil 21 verbunden ist, und einen Maßstab bzw. ein Maßband, der bzw. das beispielhaft an dem Maschinengestell 70 befestigt ist.

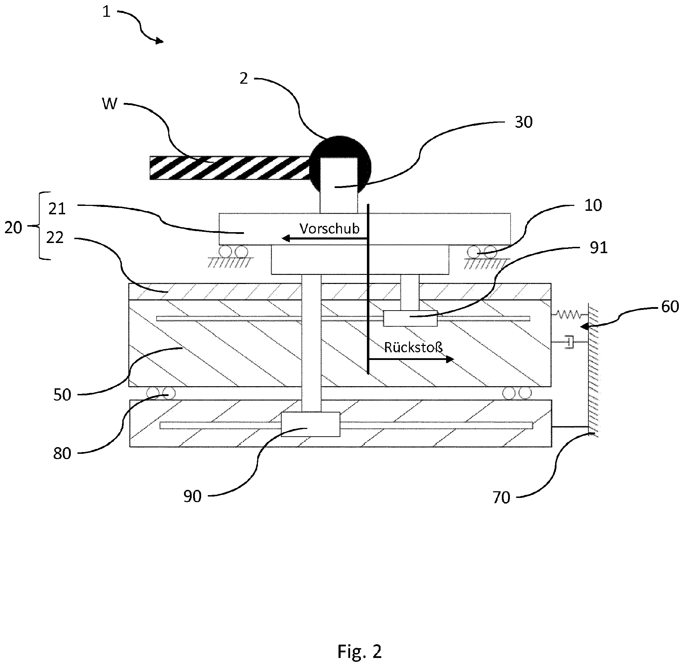

Fig. 2 zeigt schematisch eine Ausführungsform einer Impulsentkopplungsvorrichtung für eine Führungseinrichtung einer Holzbearbeitungsvorrichtung gemäß der vorliegenden Erfindung. Im Gegensatz zu dem in Fig. 1 dargestellten, herkömmlichen Achssystem weist das Achssystem gemäß der vorliegenden Erfindung zwei Führungseinrichtungen auf. Hierbei dient die erste Führungseinrichtung 10 wie in Fig. 1 zur beweglichen Lagerung des Primärteils 21, um eine Bewegung des Primärteils 21 relativ zu dem Sekundärteil 22 zu ermöglichen. Die zusätzliche, zweite Führungseinrichtung 80 ist zwischen dem Maschinengestell 70 und einer Reaktionsmasse 50 angeordnet und dient zur Impulsentkopplung zwischen Antriebsvorrichtung 20 und Maschinengestell 70. Wie in Fig. 1 wirkt in dem Fall, dass der Primärteil 21 samt Bearbeitungsaggregat in Fig. 2 nach links beschleunigt wird (Vorschub), eine entsprechend große Reaktionskraft (Gegenkraft) auf das Sekundärteil 22, die über das Sekundärteil 22 auf die Reaktionsmasse 50 übertragen wird. Im Gegensatz zu dem in Fig. 1 dargestellten Achssystem wird jedoch aufgrund der erfindungsgemäßen Impulsentkoppelungsvorrichtung 1, die eine zweite Führungseinrichtung 80 aufweist, die auf das Sekundärteil 22 übertragene Reaktionskraft nicht in das Maschinengestell eingeleitet, sondern durch eine Gegenbewegung der Reaktionsmasse 50 (samt Sekundärteil 22) kompensiert. Entsprechend kann eine Übertragung von unerwünschten Schwingungen oder Stößen (Kraftstößen) auf das Maschinengestell 70 reduziert, insbesondere vollständig vermieden werden.

Zur weiteren Reduzierung bzw. Dämpfung der Reaktionskraft weist die in Fig. 2 dargestellte Ausführungsform der Impulsentkopplungsvorrichtung 1 ferner eine Dämpfungseinrichtung 60 auf, die beispielhaft aus einem Dämpfungselement und einer Feder besteht. Die Dämpfungseinrichtung 60 ist zwischen Maschinengestell 70 und Reaktionsmasse 50 vorgesehen und dämpft eine durch die Einleitung der Reaktionskraft in die Reaktionsmasse 50 verursachte Schwingung oder Stoß. Auf diese Weise ist es möglich, eine Amplitude der Gegenbewegung zu reduzieren und somit die Trägheit der Impulsentkopplungsvorrichtung zu reduzieren. Auf diese Weise kann vermieden werden, dass die Impulsentkopplungsvorrichtung der Bewegung des Primärteils übermäßig nachschwingt (nacheilt).

In der beschriebenen Ausführungsform der vorliegenden Erfindung ist mittels der Impulsentkopplungsvorrichtung 1 ein Bearbeitungsaggregat an einem Maschinengestell 70 beweglich angebracht. Es ist jedoch auch möglich, die Impulsentkopplungsvorrichtung 1 innerhalb eines Bearbeitungsaggregates vorzusehen, um beispielsweise Werkzeugaufnahmen innerhalb des Bearbeitungsaggregates verfahren zu können. Entsprechend kann ein einzelnes Bearbeitungsaggregat mit mehreren Impulsentkopplungsvorrichtungen versehen sein, um eine Impulsentkopplung zwischen einzelnen Führungseinrichtungen 10 des Bearbeitungsaggregates zu realisieren.

Wie der Fig. 2 weiter entnommen werden kann, ist es vorteilhaft zusätzlich zu dem in Fig. 1 gezeigten Wegmesssystem 90 ein zweites Wegmesssystem 91 vorzusehen, das zur Erfassung einer Relativbewegung zwischen Primärteil 21 und Sekundärteil 22 eingerichtet ist, zur Kommutierung der Antriebsvorrichtung 20. Alternativ zu dem zweiten Wegmesssystem 91 kann auch ein Hallsensor vorgesehen sein. In der in Fig. 2 gezeigten Ausführungsform der vorliegenden Erfindung ist wie in Fig. 1 der Primärteil 21 der Antriebsvorrichtung 20 über die erste Führungseinrichtung 10 am Maschinengestell 70 gelagert. Es besteht jedoch alternativ auch die Möglichkeit, die erste Führungseinrichtung 10 am Sekundärteil 22 bzw. an der Reaktionsmasse 50 vorzusehen. Auf diese Weise ist es möglich, eine zusätzliche Dämpfung von Schwingungen oder Stößen, die seitens des Bearbeitungsaggregates auf die erste Führungseinrichtung 10 wirken, durch die zweite Führungseinrichtung 80 zu dämpfen, bevor sie auf das Maschinengestell 70 übertragen werden.

Ferner ist es hinsichtlich der zweiten Führungseinrichtung 80 nicht notwendig, dass diese den vollständigen Bewegungsbereich der ersten Führungseinrichtung 10 abdeckt. Im Gegenteil, in Bezug auf die zweite Führungseinrichtung 80 ist es vollständig ausreichend, dass diese einen Bewegungsbereich abdeckt, der einer maximalen Auslenkung (Gegenbewegung) aufgrund der Einleitung der Reaktionskraft in das Sekundärteil 22 entspricht.

## Patentansprüche

1. Impulsentkopplungsvorrichtung (1) für eine Führungseinrichtung einer Holzbearbeitungsvorrichtung, insbesondere einer Horizontal- oder Vertikalachse einer Holzbearbeitungsvorrichtung, insbesondere für die Bearbeitung von bevorzugt plattenförmigen Werkstücken (W), die bevorzugt zumindest abschnittsweise aus Holz, Holzwerkstoff, Holzersatzwerkstoff, Kunststoff und/oder Glas bestehen, umfassend:
eine Antriebsvorrichtung (20) mit einem Primärteil (21) und einem Sekundärteil (22),
eine erste Führungseinrichtung (10), insbesondere eine translatorische oder rotatorische erste Führungseinrichtung (10), wobei die erste Führungseinrichtung (10) das Primärteil (21) beweglich lagert,
eine Befestigungseinrichtung (30), die dazu eingerichtet ist, ein Bearbeitungsaggregat (40) aufzunehmen und an das Primärteil (21) anzubinden, und
eine Reaktionsmasse (50), die mit dem Sekundärteil (22) verbunden ist und dazu eingerichtet ist, bei einer Bewegung des Primärteils (21) gemeinsam mit dem Sekundärteil (22) eine Gegenbewegung in Reaktion auf die Bewegung des Primärteils (21) ausführen zu können.

2. Impulsentkopplungsvorrichtung (1) nach Anspruch 1, ferner umfassend eine Dämpfungseinrichtung (60), die bevorzugt zwischen einem Maschinengestell (70) und dem Sekundärteil (22) und/oder der Reaktionsmasse (50) angeordnet ist, wobei
die Dämpfungseinrichtung (60) dazu eingerichtet ist, Schwingungen oder Stöße des Sekundärteils (22) und der Reaktionsmasse (50), die aufgrund der Gegenbewegung erzeugt werden, zu dämpfen und/oder zu eliminieren.

3. Impulsentkopplungsvorrichtung (1), nach Anspruch 1 oder 2, ferner umfassend eine zweite Führungseinrichtung (80), die an einem/dem Maschinengestell (70) der Holzbearbeitungsvorrichtung befestigt ist und das Sekundärteil (22) und die Reaktionsmasse (50) beweglich lagert, wobei insbesondere eine Bewegungsrichtung der ersten Führungseinrichtung (10) parallel zu einer Bewegungsrichtung der zweiten Führungseinrichtung (80) ist.

4. Impulsentkopplungsvorrichtung (1) nach einem der vorhergehenden Ansprüche, bei der die erste Führungseinrichtung (10) an einem/dem Maschinengestell (70) oder dem Sekundärteil (22) oder der Reaktionsmasse (50) befestigt ist.

5. Impulsentkopplungsvorrichtung (1) nach einem der Ansprüche 2 bis 4, bei der die Dämpfungseinrichtung (60) zumindest ein passives und/oder aktives Dämpfungselement aufweist, wobei das zumindest eine Dämpfungselement ausgewählt ist aus der Gruppe:
eine Feder, ein pneumatischer oder hydraulischer Stoßdämpfer, ein elektromagnetischer Dämpfer, ein Wirbelstromelement oder ein elektromechanischer Wandlerwerkstoff.

6. Impulsentkopplungsvorrichtung (1) nach einem der vorhergehenden Ansprüche, ferner umfassend ein erstes Wegmesssystem (90), das zur Erfassung einer Position des Primärteils (21) in Bezug auf ein/das Maschinengestell (70) der Holzbearbeitungsvorrichtung eingerichtet ist.

7. Impulsentkopplungsvorrichtung (1) nach einem der vorhergehenden Ansprüche, ferner umfassend ein zweites Wegmesssystem (91), das zur Erfassung einer Relativbewegung zwischen Primärteil (21) und Sekundärteil (22) eingerichtet ist, zur Kommutierung der Antriebsvorrichtung (20).

8. Impulsentkopplungsvorrichtung (1) nach einem der vorhergehenden Ansprüche, bei der die erste Führungseinrichtung (10) und/oder die zweite Führungseinrichtung (80) ausgewählt ist/sind aus der Gruppe:
eine Linearführung, insbesondere Gleitführung oder Wälzführung, eine Profilschienenführung oder ein Drehlager, insbesondere Drehkranz.

9. Impulsentkopplungsvorrichtung (1) nach einem der vorhergehenden Ansprüche, bei der die Antriebsvorrichtung (20) ausgewählt ist aus der Gruppe:
ein elektrischer Linearmotor, ein Fluidmotor, ein Servoantrieb oder ein Schrittmotor.

10. Holzbearbeitungsvorrichtung, insbesondere für die Bearbeitung von bevorzugt plattenförmigen Werkstücken (W), die bevorzugt zumindest abschnittsweise aus Holz, Holzwerkstoff, Holzersatzwerkstoff, Kunststoff und/oder Glas bestehen, umfassend:
zumindest ein Bearbeitungsaggregat zum Bearbeiten des Werkstücks (W), und
die Impulsentkopplungsvorrichtung (1) nach einem der Ansprüche 1 bis 9.

11. Holzbearbeitungsvorrichtung nach Anspruch 10, wobei die Holzbearbeitungsvorrichtung ein CNC-Bearbeitungszentrum, eine Durchlauf-Bohrmaschine, eine Beschichtungsvorrichtung oder eine Fräsvorrichtung ist.

12. Holzbearbeitungsvorrichtung nach Anspruch 10 oder 11,
ferner umfassend eine Steuerungseinrichtung, die dazu eingerichtet ist, basierend auf Steuerungsparametern, insbesondere Beschleunigungs-, Verzögerungs-, Gewichts-, und Verfahrparametern, eine Dämpfungseinrichtung (60) der Impulsentkopplungsvorrichtung (1), insbesondere aktive Dämpfungselemente, zu steuern, insbesondere eine Dämpfungscharakteristik der aktiven Dämpfungselemente entsprechend anzupassen.

13. Verfahren zur Impulsentkopplung an einer Führungseinrichtung einer Holzbearbeitungsvorrichtung, insbesondere (einer Holzbearbeitungsvorrichtung) für die Bearbeitung von bevorzugt plattenförmigen Werkstücken (W), die bevorzugt zumindest abschnittsweise aus Holz, Holzwerkstoff, Holzersatzwerkstoff, Kunststoff und/oder Glas bestehen, umfassend die Schritte:
- Beschleunigen oder Verzögern eines Primärteils (21) einer Antriebsvorrichtung (20), insbesondere entlang einer ersten Führungseinrichtung (10),
- Aufnehmen einer Gegenbewegung eines Sekundärteils (22) zu der Beschleunigungs- oder Verzögerungsbewegung des Primärteils (21) durch eine Reaktionsmasse (50), wobei die Gegenbewegung durch eine zweite Führungseinrichtung (80) ermöglicht ist,
- passives und/oder aktives Dämpfen der Gegenbewegung des Sekundärteils (22).

14. Verfahren nach Anspruch 13, bei dem die Gegenbewegung des Sekundärteils (22) eine passive, aus der Antriebsbewegung des Primärteils (21) resultierende Bewegung ist und eine Dämpfung der Gegenbewegung mittels einer Steuerungseinrichtung gesteuert wird, die basierend auf Steuerungsparametern, insbesondere Beschleunigungs-, Verzögerungs-, Gewichts-, und Verfahrparametern, eine Dämpfungseinrichtung (60) der Impulsentkopplungsvorrichtung (1), insbesondere aktive Dämpfungselemente, steuert, wobei bevorzugt eine Dämpfungscharakteristik der aktiven Dämpfungselemente entsprechend den Steuerungsparametern angepasst wird.

15. Verfahren nach Anspruch 14, bei dem die Steuerungseinrichtung eine Dämpfungskonstante mindestens eines aktiven Dämpfungselements erhöht, wenn eine hohe Beschleunigung oder Verzögerung des Primärteils (21) erfolgen soll und die Steuerungseinrichtung die Dämpfungskonstante des mindesten einen aktiven Dämpfungselements verringert, wenn eine geringe Beschleunigung oder Verzögerung des Primärteils erfolgen soll.
